(19) Europäisches Patentamt

European Patent Office

Office européen des brevets

(11) **EP 0 545 130 B1**

(12) **EUROPÄISCHE PATENTSCHRIFT**

(45) Veröffentlichungstag und Bekanntmachung des Hinweises auf die Patenterteilung:
**14.02.1996 Patentblatt 1996/07**

(51) Int. Cl.$^6$: **B60G 17/08**, B60G 17/015

(21) Anmeldenummer: **92119542.6**

(22) Anmeldetag: **16.11.1992**

(54) **Verfahren und Vorrichtung zur Fahrwerkregelung**

Process and device for chassis control

Procédé et dispositif pour la régulation du chassis

(84) Benannte Vertragsstaaten:
**DE FR GB**

(30) Priorität: **06.12.1991 DE 4140270**

(43) Veröffentlichungstag der Anmeldung:
**09.06.1993 Patentblatt 1993/23**

(73) Patentinhaber: **ROBERT BOSCH GMBH**
**D-70442 Stuttgart (DE)**

(72) Erfinder: **Kunz, Dieter, Dipl.-Ing.**
**W-7000 Stuttgart 31 (DE)**

(56) Entgegenhaltungen:
**DE-A- 3 928 343**          **DE-A- 3 939 292**
**DE-C- 3 837 863**

**Beschreibung**

Stand der Technik

Die Erfindung betrifft ein Verfahren und eine Vorrichtung zur Fahrwerkregelung gemäß dem Oberbegriff des Anspruchs 1 bzw. 11.

Aus dem Stand der Technik sind Systeme für Kraftfahrzeuge bekannt, die die Brems- bzw. Beschleunigungsvorgänge eines Fahrzeugs derart steuert bzw. regeln, daß ein optimales Verzögern bzw. Beschleunigen bei gleichzeitiger hinreichender Fahrstabilität gewährleistet ist.

Die Aufhängungssysteme zwischen Fahrzeugaufbau und den Rädern können, wie heute noch größtenteils üblich, passiv, das heißt mit fester Dämpfungs- und/oder Federungscharakteristik ausgelegt sein, oder aktiv, das heißt mit veränderbarer Dämpfungs- und/oder Federungscharakteristik. Während bei den passiven Aufhängungssystemen Kompromisse hinsichtlich des Fahrkomforts und der Fahrsicherheit einzugehen sind, können die aktiven Systeme den jeweiligen Fahrsituationen des Fahrzeugs weitgehend angepaßt werden, so daß in fahrsicherheitsunkritischen Situationen ein hoher Fahrkomfort und in sicherheitskritischen Situationen eine hohe Fahrsicherheit erreicht wird.

In den Artikeln "PKW-ABV-Bremssysteme mit weiteren integrierten Funktionen" (Automobil-Industrie 5/89, Seiten 659 bis 673) und "Compound Control of Braking and Suspension Systems" (SAE-Paper 90 51 44, Seiten 199 bis 211) wird auf die Wechselwirkungen zwischen den Ansteuerungen der Brems- bzw. Vortriebsregelungssysteme einerseits und den Ansteuerungen der Aufhängungssysteme andererseits hingewiesen. Diese Wechselwirkungen sind insbesondere dadurch bedingt, daß die Brems- bzw. Vortriebsregelungssysteme üblicherweise die Drehzahlen der Fahrzeugräder auswerten. Die sensorisch ermittelten Drehzahl der Fahrzeugräder weisen aber, insbesondere während eines Bremsvorgangs, erhebliche Störmodulationen auf. Als wesentliche Ursache hierfür kommen Radaufstandskraftschwankungen infolge Vertikalanregungen in Betracht. Des weiteren wird in den Artikeln darauf hingewiesen, daß infolge der für Zug- und Druckstufe unterschiedlich ausgelegten Stoßdämpfercharakteristik der Stoßdämpfer im zeitlichen Mittel eine Zugkraft erzeugt, welche den Fahrzeugaufbau und die Achsen einander annähert, das heißt den Aufbau absenkt und damit eine höhere Zuladung simuliert.

In der DE-OS 39 39 292 wird ein Verbundregelsystem für Kraftfahrzeuge vorgeschlagen, das aus einer aktiven bzw. semiaktiven Fahrwerkregelung und Antiblockiersystem-(ABS) und/oder Antriebsschlupfregelungs-(ASR)Komponenten besteht, die über gemeinsame Sensoren urd Auswerte- bzw. Steuerschaltkreise verfügen. Hierzu ist es vorgesehen, daß die Auswerteschaltkreise ein Sicherheitsniveau ermitteln und daß die Steuerschaltkreise in Abhängigkeit von der Bewertung dieser Sicherheitsniveaus Steuersignale an die ABS/ASR-Komponenten und die Fahrwerkregelung abgeben. Insbesondere wird hier beschrieben, während der ABS- oder ASR-Regelungsphasen die Dämpferkraftverstellungen stets so zu tätigen, daß minimale Radlastschwankungen auftreten.

Ferner wird in der DE-PS 38 37 863 ein Federungssystem für Fahrzeuge beschrieben, bei dem die Verstellung der Stoßdämpfer derart vorgenommen werden, daß die Differenz zwischen dem Dämpfungskoeffizient für den Zughub und dem Dämpfungskoeffizient für den Druckhub verändert wird. Aufgrund ständiger kurzhubiger Schwingungen der Räder, hervorgerufen durch Unebenheiten der Fahrbahn, erzeugt der jeweilige Dämpfer eine auf den Aufbau wirkende Kraft, deren Maß von der Differenz abhängt. Durch die in Zug- und Druckrichtung unterschiedlichen Dämpfungskoeffizienten lassen sich resultierende Kräfte in einer Richtung erzeugen, wenn der Dämpfer in schneller Folge wechselnd in Zug- und Druckrichtung bewegt wird.

Aufgabe der vorliegenden Erfindung ist die Optimierung von Brems- und/oder Beschleunigungsvorgängen durch Ansteuerungen der Aufhängungssysteme während Brems- und/oder Beschleunigungsmanövern.

Diese Aufgabe wird durch die in den Ansprüchen 1, bzw. 11 genannten Merkmale gelöst.

Vorteile der Erfindung

Das erfindungsgemäße Verfahren zeichnet sich insbesondere dadurch aus, daß während Brems- und/oder Beschleunigungsmanöver die Aufhängungssysteme derart betätigt werden, daß an jeder Radeinheit die momentane Normalkraft zwischen Reifen und Fahrbahn, die Radlast, in Richtung ihres größtmöglichen Wertes beeinflußt wird.

Hierzu wird der Verlauf der Radlast, insbesondere der dynamische Anteil, aus den sensierten Bewegungen zwischen den Radeinheiten und dem Fahrzeugaufbau und/oder aus den sensierten Bewegungen der Radeinheiten bestimmt. Ergebnisse einer Frequenzanalyse der Radlasten und der zeitliche Verlauf, insbesondere die zeitliche Ableitung der Radlast, werden zur Verstellung der Aufhängungssysteme im obenbeschriebenen Sinne herangezogen.

Bei dem erfindungsgemäßen Fahrwerkregelsystem werden die Aufhängungssysteme zwischen Fahrzeugaufbau und den Rädern während Brems- und/oder Beschleunigungsmanövern derart angesteuert, daß der mittlere Abstand zwischen dem Fahrzeugaufbau und den Radeinheiten während der Brems- und/oder Beschleunigungsmanöver zeitlich fortschreitend geringer wird.

Die Erfindung betrifft ferner eine Vorrichtung zur Durchführung des obenbeschriebenen Verfahrens mit Aufhängungssystemen zwischen den Radeinheiten und dem Fahrzeugaufbau, die Bewegungen zwischen dem Fahrzeugaufbau und den Radeinheiten beeinflussen können, und erste Mittel, mittels der während Brems- und/oder Beschleunigungsmanövern die Aufhängungsysteme derart betätigt werden, daß an jeder Radeinheit die momentane Normalkraft zwischen Reifen und Fahrbahn, die Radlast, in Richtung ihres größtmöglichen Wertes beeinflußt wird.

Vorteilhafte Ausgestaltungen der Erfindung sind in den Unteransprüchen gekennzeichnet.

Zeichnung

Die Erfindung wird im folgenden anhand der in den Zeichnungen dargestellten Ausführungsformen erläutert. In den Figuren 1a, 1b und 1c sind Signalverlaufe zu sehen, die die Radlast repräsentieren. Die Figur 2 stellt ein Blockschaltbild des erfindungsgemäßen Verfahrens dar, während in der Figur 3 der detaillierte Ablauf des erfindungsgemäßen Verfahrens und in der Figur 4 ein Zwei-Körper-Modell zu sehen ist.

Ausführungsbeispiel

Unter vereinfachten Annahmen gilt für die bei einem Bremsvorgang übertragene Bremskraft

$$Fbrems = mue* N,$$

wobei mit mue der Reibkoeffizient und mit N die Normalkraft zwischen dem abgebremsten Reifen und der Fahrbahn, die Radlast, bezeichnet ist. Die Radlast setzt sich aus einem statischen Anteil Fstat, der aus dem Fahrzeuggewicht resuliert, und einem dynamischen Anteil Fdyn, der aus den durch Straßenunebenheiten und Fahrmanövern angeregten Fahrzeugschwingungen resultiert, zusammen.

$$N = Fstat + Fdyn$$

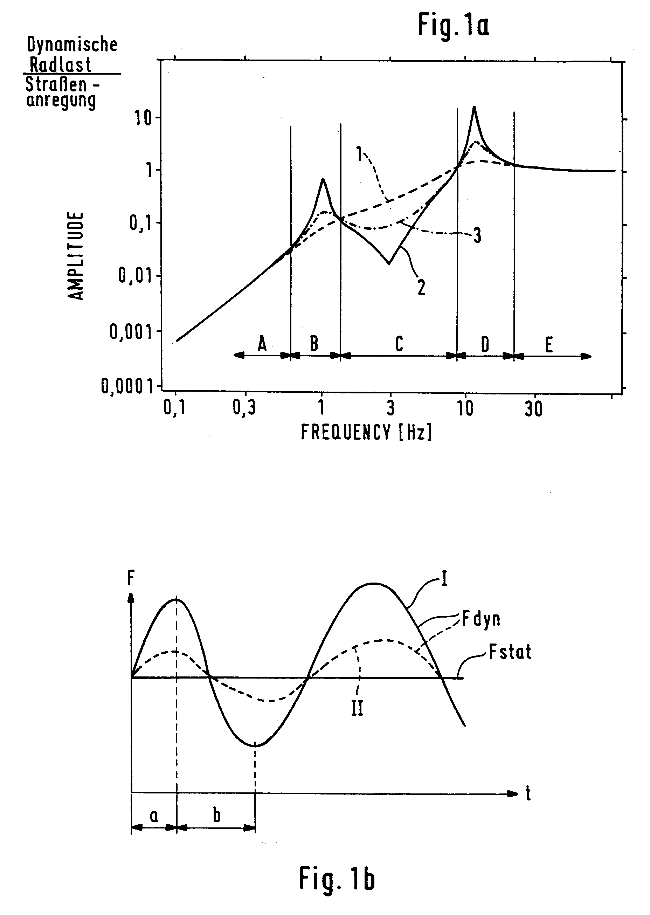

Mittels aktiver bzw. teilaktiver oder semiaktiver Fahrwerkregelung ist die dynamische Radlast in einem großen Frequenzbereich beeinflußbar. In der Figur 1a ist hierzu der Quotient aus der dynamischen Radlast Fdyn und der Straßenanregung über der Frequenz der Straßenanregung für verschiedene Auslegungen eines Fahrwerks aufgetragen.

Der mit dem Bezugszeichen 2 gekennzeichnete Verlauf entspricht etwa der einer weichen Fahrwerkeinstellung, während der mit dem Bezugszeichen 1 gekennzeichnete Verlauf dem einer harten Einstellung der Aufhängungssysteme entspricht. Der mit dem Bezugszeichen 3 markierte Verlauf entspricht beispielsweise einem konventionellen passiv ausgelegten Fahrwerk.

Man erkennt an den Amplitudenverläufen der Figur 1a, daß der Amplitudenverlauf durch eine semiaktive Dämpferregelung in weiten Bereichen beeinflußbar ist.

In der Figur 1a läßt sich der Amplitudengang in fünf charakteristische Bereiche unterteilen:

Bereich A und E:

In diesen Bereichen kann die dynamische Radlast bei Anregung durch die Straßenunebenheiten durch eine semiaktive Dämpferregelung nicht beeinflußt werden.

Bereich B und D:

In diesen Bereichen, die im allgemeinen den Resonanzfrequenzen des Fahrzeugaufbaus und der Räder entsprechen, führt eine konventionell "harte" Dämpferabstimmung zu einer Verminderung der dynamischen Radlastschwankungen (Kurve 1 in Figur 1a). Eine "weiche" Dämpferabstimmung (Kurve 2 in Figur 1a) führt in diesen Bereichen zu einer Erhöhung der dynamischen Radlastschwankungen.

Bereich C:

In diesem Bereich ist das umgekehrte Verhalten der Bereiche B und D zu beobachten. So führt im Bereich C eine "harte" Dämpferabstimmung zu einer Erhöhung der dynamischen Radlastschwankungen (Kurve 1 in Figur 1a). Eine "weiche" Dämpferabstimmung (Kurve 2 in Figur 1a) hingegen führt hier zu einer Verminderung der dynamischen Radlastschwankungen.

Die in der Figur 1a gezeigten Amplitudenverläufe 1 und 2 zeigen, daß bei den heute üblichen passiven Fahrwerkregelsystemen zur Minimierung der Radlastvariationen immer ein Kompromiß gemacht werden muß zwischen harter und weicher Dämpferabstimmung. Ein solcher Verlauf ist beispielsweise mit dem Bezugszeichen 3 in der Figur 1a zu sehen.

Die Figur 1b zeigt den zeitlichen Verlauf der statischen Radlast Fstat und der dynamischen Radlast Fdyn bei einer festen Straßenanregungsfrequenz. Während die statische Radlast Fstat die von dem Fahrzeuggewicht abhängt, zeitlich konstant bleibt, weist der dynamische Anteil Fdyn je nach Fahrwerkeinstellung die Verläufe I oder II auf.

In den Bereichen B und D würde dem Verlauf I eine weiche Dämpferabstimmung zuzuordnen sein und dem Verlauf II eine harte Dämpferabstimmung. In dem Frequenzbereich C entspricht der Verlauf I einer harten und der Verlauf II einer weichen Dämpferabstimmung.

Im Stand der Technik, wie er in der DE-OS 39 39 292 beschrieben wird, wird vorgeschlagen, während Brems- und/oder Beschleunigungsmanövern des Fahrzeugs die in der Figur 1b gezeigten Radlastschwankungen zu minimieren. Je nach der Frequenz der Straßenanregung kann beispielsweise in den Frequenzbereichen B und D eine härtere Fahrwerkeinstellung und in dem Frequenzbereich C eine weichere Fahrwerkeinstellung gewählt werden. Auf diese Weise erhält man weitgehend unabhängig vom Frequenzbereich etwa den in der Figur 1b schematisch aufgezeigten Signalverlauf II.

Demgegenüber liegt der vorliegenden Erfindung der Gedanke zugrunde, daß für den kürzestmöglichen Bremsweg bei einem vorgegebenen Fahrzustand (Straßenuebenheiten, Fahrmanöver) die Gewährleistung der größtmöglichen dynamischen Radlast erforderlich ist. Beim Erkennen einer Fahrzeugabbremsung oder Fahrzeugbeschleunigung, beispielsweise durch Auswertung des differenzierten Fahrgeschwindigkeitssignals, werden durch Messung der dynamischen Radlast und/oder durch Berechnung der dynamischen Radlast aus geeigneten Meßgrößen, wie Einfederweg und/oder Einfedergeschwindigkeit und/oder Aufbaubeschleunigung und/oder Radbeschleunigung, die Reglerparameter des Fahrwerkregelsystems so angepaßt, daß die Normalkraft für den jeweiligen Fahrzustand in Richtung des größtmöglichen Wertes beeinflußt wird. Somit wird der unter den jeweiligen Fahrbedingungen optimale Bremsweg erreicht.

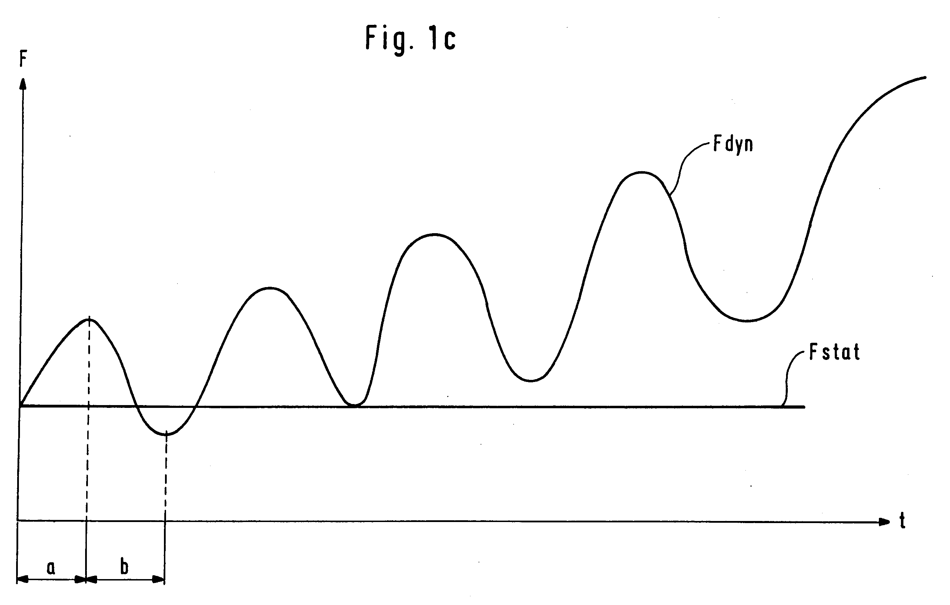

Betrachtet man in der Figur 1b den Verlauf der dynamischen Radlast Fdyn im Zeitintervall a, so erkennt man, daß eine Fahrwerkeinstellung gemäß des Verlaufs I die Radlast zu ihrem größtmöglichen Wert hin beeinflußt. Im Zeitinvervall b jedoch nimmt der dynamische Anteil der Radlast und damit die gesamte Radlast ab. Diese Abnahme ist bei der Fahrwerkeinstellung I größer als bei der Einstellung II. Eine Beeinflussung der Radlast in Richtung ihres größtmöglichen Wertes heißt also im Zeitintervall b, die Fahrwerkeinstellung II zu wählen bis die dynamische Radlast wieder ansteigt. Bei einem erneuten Ansteigen der dynamischen Radlast ist wiederum auf die Kennlinie I zu schalten, da hier der Anstieg der dynamischen Radlast größer ist als bei Vorliegen der Kennlinie II. Man gelangt auf diese Weise zu dem in der Figur 1c schematisch gezeigten Verlauf der dynamischen Radlast.

Durch die obenbeschriebene Ansteuerung der Aufhängungssysteme während Brems- und/oder Beschleunigungsvorgängen gelangt man im zeitlichen Mittel zu einer fortschreitenden Erhöhung der gesamten Radlast. Dies bedeutet, daß erfindungsgemäß während der Brems- und/oder Beschleunigungsmanöver die Aufhängungssysteme derart betätigt werden, daß der mittlere Abstand zwischen Fahrzeugaufbau und Radeinheiten während dieser Manöver zeitlich fortschreitend geringer wird. Durch eine derartige Ansteuerung senkt sich der Aufbau also immer weiter gegen die Räder ab, wodurch eine Bremswegverminderung erreicht wird.

Eine detaillierte Ausführungsform zur Erlangung des in der Figur 1c gezeigten erwünschten Verlaufs der Radlast ist im folgenden beschrieben.

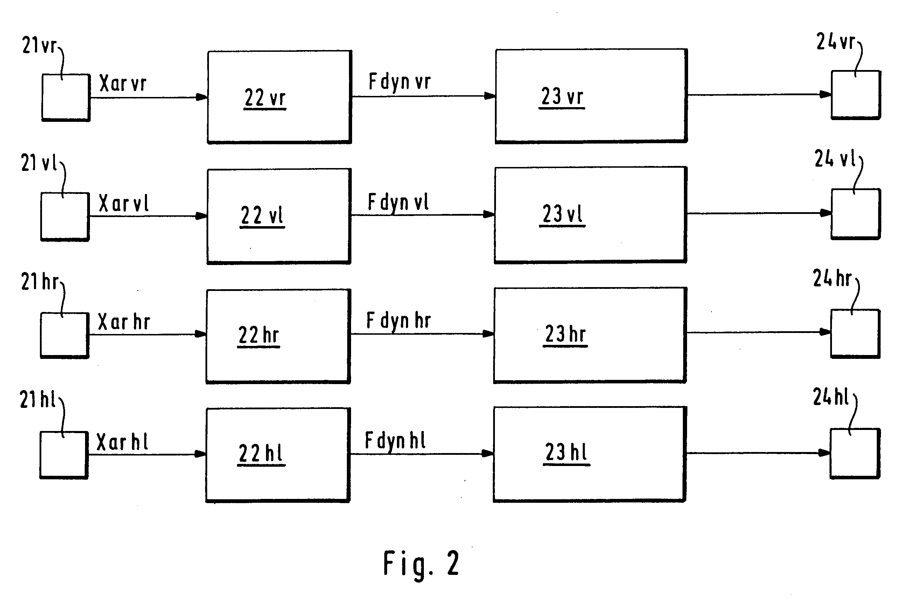

In der Figur 2 sind mit dem Bezugszeichen 21vr, 21vl, 21hr und 21hl erste Mittel zur Erfassung der Bewegungen zwischen den Radeinheiten und dem Fahrzeugaufbau und/oder der Bewegungen der Radeinheiten bezeichnet. Mit den Positionen 22vr, 22vl, 22hr und 22hl sind zweite Mittel zur Ermittlung der Radlast markiert. Die Positionen 23vr, 23vl, 23hr und 23hl kennzeichnen dritte Mittel, durch deren Ausgangssignale die Aufhängungssysteme 24vr, 24vl, 24hr und 24hl beaufschlagt werden.

Im folgenden durchläuft der Index i den Wertebereich v (vorne) und h (hinten), während der Index j den Wertebereich r (rechts) und l (links) durchläuft. Durch die ersten Mittel 21ij werden die Bewegungen zwischen den Radeinheiten und dem Fahrzeugaufbau und/oder die Bewegungen der Radeinheiten erfaßt. Dies kann durch Sensoren geschehen, die den Einfederweg und/oder die Einfedergeschwindigkeit und/oder die Radbeschleunigung messen. Ausgangsseitig der ersten Mittel 21ij liegen somit zweite Signale Xarij an, die die Bewegungen zwischen den Radeinheiten und dem Fahrzeugaufbau, beispielsweise den Einfederweg und/oder die Einfedergeschwindigkeit, und/oder die Bewegungen der Radeinheiten repräsentieren. Diese zweiten Signale Xarij werden den zweiten Mitteln 22ij zugeführt. Die zweiten Mittel 22ij weisen eine derartige Übertragungseigenschaft auf, daß ausgangsseitig der zweiten Mittel Signale Fdynij anliegen, die den dynamischen Anteil der Radlast repräsentieren.

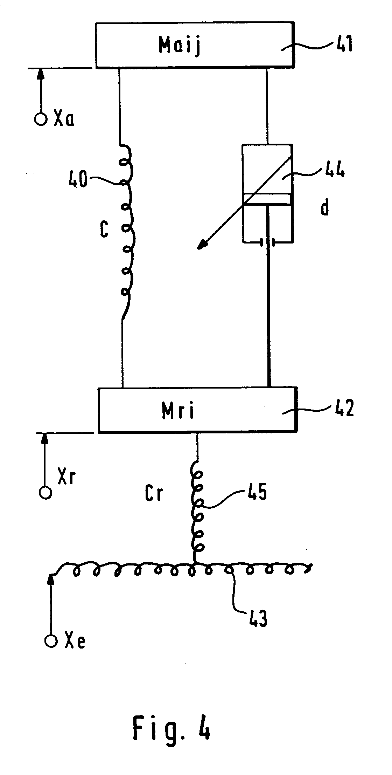

Die Übertragungseigenschaft der zweiten Mittel 22ij kann anhand des in der Fig.4 gezeigten Zwei-Körper-Modells des Fahrzeugaufbaus und einer Radeinheit abgeleitet werden.

Fig.4 zeigt ein Aufhängungssystem. Mit der Position 41 ist der Fahrzeugaufbau mit der anteiligen Masse Maij bezeichnet. Die Position 42 stellt das Rad mit der Radmasse Mri und die Position 45 eine Feder mit der Federkonstanten Cr dar. Die Fahrbahn ist mit Position 43 bezeichnet. Ein Dämpfer 44 mit der Dämpfungskonstanten d stellt mit einer parallel angeordneten Feder 40 (Federkonstante C) das zu steuernde/regelnde Aufhängungssystem dar. Der Dämpfer 44 ist in seiner Dämpfungscharakteristik verstellbar ausgelegt.

Die Positionen 40, 41, 42, 43, 44 und 45 in der Figur 4 zeigen ein Zwei-Körper-Modell. Das Rad ist in Kontakt mit der Fahrbahn 43. Hierbei ist die Rad- bzw. Reifensteifigkeit als Feder 45 mit der Federkonstanten Cr modellhaft beschrieben. In diesem Ausführungsbeispiel wird der Dampfer 44 als verstellbar angenommen, während die Eigenschaften der Feder 40 durch einen konstanten Wert C beschrieben wird. Darüber hinaus kann auch die Feder 40 verstellbar ausgelegt sein. Die Kombination der Feder 40 und des bezüglich seiner Dämpfungseigenschaft verstellbaren Dämpfers 44 steht also hier für das zu steuernde/regelnde Aufhängungssystem. Mit Xa bzw. Xr ist die Verschiebung des Fahrzeugaufbaus bzw. die Verschiebung des Rades bezeichnet, und zwar die Verschiebung aus der Gleichgewichtslage bei Stillstand des Fahrzeuges (im unbeladenen Zustand). Mit Xe werden die Bodenunebenheiten beschrieben.

Der Zusammenhang zwischen der Einfederbewegung Xarij und der dynamischen Radlast Fdynij an der ij-ten Radeinheit ergibt sich zu

$$\text{Fdynij} = -[(1+Mr/Ma)^*C + (1+Mr/Ma)^*d^*s + Mr^*s^2] * \text{Xarij} \qquad (1),$$

wobei s die Laplace-Variable und die weiteren Größen der Figur 4 bzw. deren Beschreibung zu entnehmen sind. Mit Xarij ist der sogenannte "entmittelte" Federweg bezeichnet, der aus der Meßgröße (Xa-Xr)ij, dem Federweg` durch Subtraktion ihres laufenden Mittelwertes

$$1/Tm^* \int_{t-Tm}^{t} [(Xa(r)-Xr(r))ij] \, dr \qquad (2)$$

zu

$$\text{Xarij}(t) = [(Xa(t)-Xr(t))ij] - [1/Tm^* \int_{t-Tm}^{t} [(Xa(r)-Xr(r))ij] \, dr] \qquad (3)$$

entsteht. Hierbei ist Tm ein Abstimmungsparameter und t der aktuelle Zeitpunkt. Durch diese "Entmittelung" des Federweges (Xa-Xr)ij wird sowohl der Einfluß einer Beladung des Fahrzeuges, das heißt eine Änderung des statischen Federweges, als auch der Einfluß unsymmetrischer (bezüglich Druck- und Zugbereich) Feder- und/oder Dämpferkennlinien (Änderung des mittleren dynamischen Federweges) auf die Berechnung der Radlastschwankung eliminiert.

Durch die ersten Mittel 21ij werden in diesem Ausführungsbeispiel je Radeinheit bzw. Federungs- und/oder Dämpfungssystem die Einfederbewegungen erfaßt. Dies kann durch entsprechende Sensoren, die beispielsweise den relativen Einfederweg und/oder die Einfedergeschwindigkeit und/oder damit zusammenhängende Größen wie beispielsweise Druckdifferenzen in den Dämpfungssystemen detektieren. Hier werden für jedes Aufhängungssystem durch die ersten Mittel 21ij die Federwege (Xa-Xr)ij erfaßt. Weiterhin werden in den ersten Mitteln 21ij aus den erfaßten Federwegen (Xa-Xr)ij gemäß der obigen Gleichung (3) die "entmittelten" Federwege ermittelt. Die zweiten Signale Xarij, die ausgangsseitig der ersten Mittel 21ij anliegen, repräsentieren die "entmittelten" Einfederwege.

Eine zweckmäßige Ausgestaltung der erfindungsgemäßen Einrichtung besteht in einer ergänzenden Verarbeitung des Federwegsignals. Da die Übertragungsfunktion gemäß Gleichung (1) zwischen den Größen Fdynij und Xarij differenzierendes Verhalten zeigt, muß sichergestellt werden, daß hochfrequente Störungen, beispielsweise größer als 20 Hz, im Meßwert des Federwegsignals nicht verstärkt werden. Dies kann beispielsweise durch Filter vom Typ eines Tiefpassfilters oder bei digitaler Verarbeitung in Rechnereinheiten durch einen zusätzlichen Algorithmus erreicht werden.

Die Zweiten Mittel 22ij sind also derart ausgebildet, daß sie, ausgehend von den eingangsseitig anliegenden zweiten Signalen Xarij, den aktuellen Wert Fdynij der Radlastschwankung gemäß der Gleichung (1) bilden. Die dritten Mittel 22ij sind also durch die Übertragungseigenschaft

$$-[(1+Mr/Ma)^*C + (1+Mr/Ma)^*d^*s + Mr^*s^2]$$

gekennzeichnet. Die Werte der Modellparameter (Ma, Mr, C, Cr und d) sind entweder bekannt oder können für ein bestimmtes Fahrzeug, dessen Fahrwerk zu steuern/regeln ist, beispielsweise durch Parameteridentifikationsverfahren ermittelt werden.

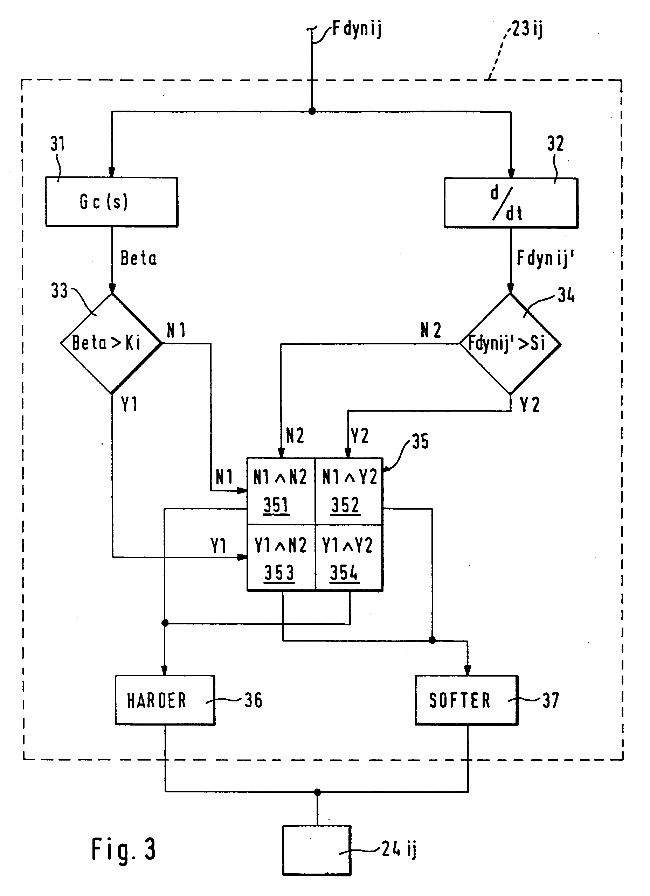

Die ersten Signale Fdyn, die den dynamischen Anteil der Radlast repräsentieren, werden nun dritten Mitteln 23ij zugeführt. Ausgangsseitig der dritten Mittel 23ij liegen Ansteuersignale für die Aufhängungssysteme 24ij an. Die Funktionsweise der dritten Mittel 23ij soll im folgenden anhand der Figur 3 erläutert werden.

In den dritten Mitteln 23ij werden die ersten Signale Fdynij in vierten Mitteln 31 mit bandpaßartigem Verhalten bearbeitet. Durch diese Bearbeitung werden die Anteile des ersten Signals Fdynij herausgefiltert, die in dem Frequenzbereich C der Figur 1a liegen. Ausgangsseitig der vierten Mittel 31 liegt das dritte Signal beta an.

Die Größe des dritten Signals beta hängt also von der Frequenz des ersten Signals Fdynij ab. Weist die dynamische Radlast eine Frequenz auf, die im Bereich C der Figur 1a liegt, so ist das dritte Signal beta größer als wenn die dynamische Radlast im Frequenzbereich B oder D der Figur 1a liegt. Durch einen Vergleich des dritten Signals beta mit der ersten Schwelle Ki in den sechsten Mitteln 33 kann also, je nach Unter- bzw. Überschreiten der ersten Schwelle entschieden werden, ob die dynamische Radlast gemäß Figur 1a im Frequenzbereich C (Vergleichsergebnis Y1) oder im Frequenzbereich B oder D (Vergleichsergebnis N1) liegt. So gelangt man zu den ersten Vergleichsergebnissen Y1 bzw. N1.

In einem weiteren Bearbeitungszweig der Mittel 23ij wird das erste Signals Fdynij den fünften Mitteln 32 zugeführt, die eine differenzierende Übertragungseigenschaft aufweisen. Ausgangsseitig der Mittel 32 liegt somit das vierte Signal Fdynij' an, daß die zeitliche Ableitung der dynamischen Radlast repräsentiert. Dieses vierte Signal Fdynij' wird in den siebten Mitteln 34 mit einer zweiten Schwelle Si verglichen. Ausgangsseitig der Mittel 34 liegt als zweites Vergleichsergebnis Y2 an, wenn das Signal Fdynij' größer als die Schwelle Si ist, während als zweites Vergleichsergebnis das Signal N2 anliegt, wenn das Signal Fdynij' kleiner als die zweite Schwelle Si ist. Die ersten und zweiten Vergleichsergebnisse werden in der Einheit 35 miteinander verknüpft.

Liegen ausgangsseitig der Mittel 33 und 34 gleichzeitig die Signale N1 und N2 an, so werden die Aufhängungssysteme 24ij derart angesteuert, daß sie eine härtere Charakteristik einnehmen. Dies ist in der Figur 3 mit den Blöcken 351 und 36 schematisch dargestellt. Liegt ausgangsseitig der Mittel 33 das Vergleichsergebnis N1 und ausgangsseitig der Mittel 34 das Signal Y2 an, so werden die Aufhängugnssysteme 24ij derart angesteuert, daß sie eine weichere Charakteristik einnehmen. Bei gleichzeitigem Vorliegen der Verknüpfungsergebnisse Y1 und N2 wird das Aufhängungssystem 24ij in Richtung weich verstellt, während es bei gleichzeitigem Auftreten der Verknüpfungsergebnisse Y1 und Y2 zu einer härteren Charakteristik hin verstellt wird.

Die Schwellen KI und SI können entweder konstant oder abhängig von Größen gewählt werden, die vom Fahrzustand des Fahrzeugs abhängen oder ihn repräsentieren. Insbesondere die Schwelle SI kann beispielsweise gleich 0 gesetzt werden.

Durch das Regelgesetz, das in den ersten Mitteln 23ij implementiert ist, gelangt man zu dem obenbeschriebenen gewünschten Radlastverlauf gemäß der Figur 1c.

Besonders vorteilhaft ist es, daß das erfindungsgemäße Verfahren bei Fahrzeugen verwendet wird, die ein Antiblockiersystem (ABS) und/oder ein Antriebsschlupfregelungssystem (ASR) aufweisen. Hierbei findet eine erfindungsgemäße Ansteuerung der Aufhängungssysteme beispielsweise bei den Brems- und/oder Beschleunigungsvorgängen statt, bei denen das Antiblockiersystem in den Bremsvorgang bzw. das Antriebsschlupfregelungssystem in den Beschleunigungsvorgang steuernd bzw. regelnd eingreift.

Weiterhin kann vorgesehen sein, daß durch weitere Frequenzanalysen der ersten Signale Fdynij bestimmt wird, ob die Frequenzen der momentanen Radlastschwankungen in den Bereichen B, D, A oder E der Figur 1a liegen. Stellt man hierdurch fest, daß die Radlastschwankungsfrequenz in den Bereichen A oder E liegt, so werden beispielsweise keine Verstellungen der Aufhängungssysteme getätigt.

## Patentansprüche

1. Verfahren zur Fahrwerkregelung mit steuerbaren Aufhängungssystemen, die zwischen den Radeinheiten und dem Fahrzeugaufbau angebracht sind und die Bewegungen zwischen dem Fahrzeugaufbau und den Radeinheiten beeinflussen können, dadurch gekennzeichnet, daß während Brems- und/oder Beschleunigungsmanövern die Aufhängungssysteme derart betätigt werden, daß an jeder Radeinheit die momentane Normalkraft zwischen Reifen und Fahrbahn, die Radlast, in Richtung ihres größtmöglichen Wertes beeinflußt wird.

2. Verfahren nach Anspruch 1, dadurch gekennzeichnet, daß abhängig von der Frequenz und dem zeitlichen Verlauf der Radlast Verstellungen der Aufhängungssysteme getätigt werden.

3. Verfahren nach wenigstens einem der vorhergehenden Ansprüche, dadurch gekennzeichnet, daß erste Signale (Fdyn) bestimmt werden, die wenigstens den dynamischen Anteil der Radlast repräsentieren.

4. Verfahren nach wenigstens einem der vorhergehenden Ansprüche, dadurch gekennzeichnet, daß zur Bestimmung der ersten Signale (Fdyn) zweite Signale (Xarij) herangezogen werden, die die Bewegungen zwischen den Radeinheiten und dem Fahrzeugaufbau und/oder die Bewegungen der Radeinheiten repräsentieren.

5. Verfahren nach wenigstens einem der vorhergehenden Ansprüche, dadurch gekennzeichnet, daß das erfindungsgemäße Verfahren bei Fahrmanövern angewendet wird, bei denen Beschleunigungen oberhalb wählbarer Schwellen vorliegen, beispielsweise dann, wenn ein im Fahrzeug vorhandenes Antiblockier- und/oder Antriebsschlupfregelungssystem in die Brems- bzw. Beschleunigungsvorgänge steuernd bzw. regelnd eingreift.

6. Verfahren nach wenigstens einem der vorhergehenden Ansprüche, dadurch gekennzeichnet, daß die ersten Signale (Fdyn) zur Bildung von dritten Signalen (beta) frequenzselektiv ausgewertet werden, die dritten Signalen (beta) mit ersten Schwellen (Ki) zur Bildung eines ersten Vergleichsergebnisses (Y1, N1) verglichen werden und das erste Vergleichsergebnis (Y1, N1) zur Ansteuerung der Aufhängungssysteme herangezogen wird und/oder

die ersten Signale (Fdyn) zur Bildung von vierten Signalen (Fdyn') differenziert werden, die vierten Signalen (Fdyn') mit zweiten Schwellen (Si) zur Bildung eines zweiten Vergleichsergebnisses (Y2, N2) verglichen werden und das zweite Vergleichsergebnis (Y2, N2) zur Ansteuerung der Aufhängungssysteme herangezogen wird.

7. Verfahren nach wenigstens einem der vorhergehenden Ansprüche, dadurch gekennzeichnet, daß die ersten und zweiten Vergleichsergebnisse zur Ansteuerung der Aufhängungssysteme logisch verknüpft werden.

8. Vorrichtung zur Durchführung des Verfahrens nach Anspruch 1, dadurch gekennzeichnet, daß die steuerbaren Aufhängungssysteme (24ij) zwischen den Radeinheiten und dem Fahrzeugaufbau angebracht sind und die Bewegungen zwischen dem Fahrzeugaufbau und den Radeinheiten beeinflussen können, und daß Mittel (21ij, 22ij, 23ij) vorgesehen sind, mittels derer während Brems- und/oder Beschleunigungsmanövern die Aufhängungssysteme derart betätigt werden, daß an jeder Radeinheit die momentane Normalkraft zwischen Reifen und Fahrbahn, die Radlast, in Richtung ihres größtmöglichen Wertes beeinflußt wird.

9. Vorrichtung nach Anspruch 8, dadurch gekennzeichnet, daß erste Mittel (21ij) zur Erfassung der Bewegungen zwischen den Radeinheiten und dem Fahrzeugaufbau und/oder der Bewegungen der Radeinheiten und zweite Mittel (22ij) zur Ermittelung der Radlast, insbesondere des dynamischen Anteils der Radlast, vorgesehen sind.

10. Vorrichtung nach Anspruch 8 und/oder 9, dadurch gekennzeichnet, daß vierte Mittel (31) zur Frequenzanalyse und fünfte Mittel (32) zur Differenzierung der Ausgangssignale der zweiten Mittel (22ij) und sechste Mittel (33, 34) zur Schwellwertabfrage der Ausgangssignale der vierten und fünften Mittel vorgesehen sind.

11. Fahrwerkregelsystem mit steuerbaren Aufhängungssystemen, die zwischen den Radeinheiten und dem Fahrzeugaufbau angebracht sind und die Bewegungen zwischen dem Fahrzeugaufbau und den Radeinheiten beeinflussen können, dadurch gekennzeichnet, daß während Brems- und/oder Beschleunigungsmanövern die Aufhängungssysteme derart betätigt werden, daß der mittlere Abstand zwischen Fahrzeugaufbau und Radeinheiten während Brems- und/oder Beschleunigungsmanöver zeitlich fortschreitend geringer wird.

## Claims

1. Process for chassis control with controllable suspension systems which are mounted between the wheel units and the body of the vehicle and can influence the movements between the body of the vehicle and the wheel units, characterized in that the suspension systems are actuated during braking and/or acceleration manoeuvres in such a way that at each wheel unit the instantaneous normal force between tyre and carriageway, the wheel load, is influenced in the direction of its maximum value.

2. Process according to Claim 1, characterized in that adjustments of the suspension systems are brought about as a function of the frequency and the variation of the wheel load over time.

3. Process according to at least one of the preceding claims, characterized in that first signals (Fdyn) are determined which represent at least the dynamic portion of the wheel load.

4. Process according to at least one of the preceding claims, characterized in that, in order to determine the first signals (Fdyn), second signals (Xarij) are used which represent the movements between the wheel units and the body of the vehicle and/or the movements of the wheel units.

5. Process according to at least one of the preceding claims, characterized in that the process according to the invention is used during driving manoeuvres during which accelerations above selectable thresholds occur, for example when an anti-lock brake control system or traction control system present in the vehicle intervenes in the braking and acceleration processes in a controlling or regulating way.

6. Process according to at least one of the preceding claims, characterized in that
the first signals (Fdyn) for forming third signals (beta) are evaluated in a frequency-selective manner, the third signals (beta) are compared with first thresholds (Ki) to form a first comparison result (Y1, N1) and the first comparison result (Y1, N1) is used to actuate the suspension systems and/or the first signals (Fdyn) for forming fourth signals (Fdyn') are differentiated, the fourth signals (Fdyn') are compared with second thresholds (Si) to form a second comparison result (Y2, N2) and the second comparison result (Y2, N2) is used to actuate the suspension systems.

7. Process according to at least one of the preceding claims, characterized in that the first and second comparison results are logically connected in order to actuate the suspension systems.

8. Device for carrying out the process according to Claim 1, characterized in that the controllable suspension systems (24ij) are mounted between the wheel units and the body of the vehicle and can influence the movements between the body of the vehicle and the wheel units, and in that means (21ij, 22ij, 23ij) are provided by means of which the suspension systems are actuated during braking and/or acceleration manoeuvres in such a way that at each wheel unit the instantaneous normal force between tyre and carriageway, the wheel load, is influenced in the direction of its maximum value.

9. Device according to Claim 8, characterized in that first means (21ij) are provided for measuring the movements between the wheel units and the body of the vehicle and/or the movements of the wheel units and second means (22ij) for determining the wheel load, in particular the dynamic portion of the wheel load.

10. Device according to Claim 8 and/or 9, characterized in that fourth means (31) are provided for frequency analysis and fifth means (32) are provided for differentiating the output signals of the second means (22ij) and sixth means (33, 34) are provided for threshold value interrogation of the output signals of the fourth and fifth means.

11. Chassis control system with controllable suspension systems which are mounted between the wheel units and the body of the vehicle and can influence the movements between the body of the vehicle and the wheel units, characterized in that the suspension systems are actuated during braking and/or acceleration manoeuvres in such a way that the average distance between the body of the vehicle and the wheel units becomes progressively smaller over time during braking and/or acceleration manoeuvres.

## Revendications

1. Procédé de régulation d'un châssis équipé de systèmes de suspension commandés entre les ensembles de roues et le châssis, et qui peuvent influencer les mouvements entre le châssis et les ensembles de roues, caractérisé en ce que pendant les manoeuvres de freinage et/ou d'accélération, on commande les systèmes de suspension pour influencer au niveau de chaque ensemble de roues, la force normale instantanée entre les pneumatiques et la chaussée, c'est-à-dire la charge de roue, pour que celle-ci prenne sa plus grande valeur possible.

2. Procédé selon la revendication 1, caractérisé en ce qu'on commande les systèmes de suspension en fonction de la fréquence et de l'évolution chronologique de la charge de roue.

3. Procédé selon au moins l'une des revendications précédentes, caractérisé en ce qu'on détermine les premiers signaux (Fdyn) qui représentent au moins la composante dynamique de la charge de roue.

4. Procédé selon au moins l'une des revendications précédentes, caractérisé en ce que pour déterminer les premiers signaux (Fdyn), on utilise des seconds signaux (Xarij) qui représentent les mouvements entre les ensembles de roues et le châssis et/ou les mouvements des ensembles de roues.

5. Procédé selon au moins l'une des revendications précédentes, caractérisé en ce qu'il est appliqué aux manoeuvres de conduite pour lesquelles les accélérations dépassent des seuils choisis, par exemple lorsqu'un système antiblocage et/ou antipatinage intervient pour commander ou réguler les opérations de freinage ou d'accélération du véhicule.

6. Procédé selon au moins l'une des revendications précédentes, caractérisé en ce que :

   - les premiers signaux (Fdyn) sont exploités pour former les troisièmes signaux (beta) de fréquence sélective, ces troisièmes signaux (beta) étant comparés à des premiers seuils (Ki) pour former un premier résultat de comparaison (Y1, N1) et ce premier résultat de comparaison (Y1, N1) est utilisé pour commander les systèmes de suspension et/ou,
   - les premiers signaux (Fdyn) sont différentiés pour former les quatrièmes signaux (Fdyn') qui sont comparés à des seconds seuils (Si) pour former un second résultat de comparaison (Y2, N2) et ce second résultat de comparaison (Y2, N2) est utilisé pour commander les systèmes de suspension.

7. Procédé selon au moins l'une des revendications précédentes, caractérisé en ce que les premiers et seconds résultats de comparaison sont combinés selon une fonction logique pour commander les systèmes de suspension.

8. Dispositif pour la mise en oeuvre du procédé selon la revendication 1, caractérisé en ce que les systèmes de suspension commandés (24ij) sont prévus entre les ensembles de roues et le châssis et peuvent influencer les mouvements entre le châssis et les ensembles de roues et des moyens (21ij, 22ij, 23ij) sont prévus pour actionner les systèmes de suspension pendant les manoeuvres de freinage et/ou d'accélération pour influencer au niveau de chaque ensemble de roues, la force normale instantanée entre les pneumatiques et la chaussée c'est-à-dire la charge de roues dans le sens de sa plus grande valeur possible.

9. Dispositif selon la revendication 8, caractérisé par des premiers moyens (21ij) pour détecter les mouvements entre les ensembles de roues et le châssis et/ou les mouvements des ensembles de roues et des seconds (22ij) pour déterminer la charge de roue notamment la composante dynamique de la charge de roue.

10. Dispositif selon la revendication 8 et/ou 9, caractérisé par des quatrièmes moyens (31) pour l'analyse de fréquence et des cinquièmes moyens (32) pour différentier les signaux de sortie des seconds moyens (22ij) et les sixièmes moyens (33, 34) pour déterminer la valeur de seuil des signaux de sortie des quatrièmes et cinquièmes moyens.

11. Système de régulation de châssis à systèmes de suspension commandés entre les ensembles de roues et le châssis, et influençant les mouvements entre le châssis et les ensembles de roues, caractérisé en ce que pendant les manoeuvres de freinage et/ou d'accélération, les systèmes de suspension sont commandés pour que l'intervalle moyen entre le châssis et les ensembles de roues diminue progressivement dans le temps au cours des manoeuvres de freinage et/ou d'accélération.

# Fig.1a

Dynamische
Radlast
Straßen -
anregung

# Fig. 1b

Fig. 1c

Fig. 2

EP 0 545 130 B1

Fig. 3

Fig. 4